# EUROPÄISCHE PATENTSCHRIFT

(11) **EP 1 869 928 B1**
(45) Veröffentlichungstag und Bekanntmachung des Hinweises auf die Patenterteilung: **08.10.2008**
(21) Anmeldenummer: 06725450.8
(22) Anmeldetag: 30.03.2006
(51) Int. Cl.: H04Q 7/38

(54) **AUFRECHTERHALTUNG VON DATEN-VERBINDUNGEN BEIM WECHSEL DES KOMMUNIKATIONSZUGANGSNETZES**
MAINTENANCE OF DATA CONNECTIONS DURING THE CHANGEOVER OF A COMMUNICATION ACCESS NETWORK
ENTRETIEN DE LIAISONS DE DONNEES LORS DU CHANGEMENT DU RESEAU D'ACCES DE COMMUNICATION

(30) Priorität: 01.04.2005 DE 102005015111
(43) Veröffentlichungstag der Anmeldung: 26.12.2007
(73) Patentinhaber: Nokia Siemens Networks GmbH & Co. KG, 81541 München (DE)
(72) Erfinder: BÖHM, Wolfgang, 86807 Buchloe (DE); KIESELMANN, Gerhard, 80805 München (DE); KIM, Peter, 12623 Berlin (DE); MILINSKI, Alexander, 81371 München (DE)
(74) Vertreter: Fischer, Michael
(86) Internationale Anmeldenummer: PCT/EP2006/061202
(87) Internationale Veröffentlichungsnummer: WO 2006/103280

(56) Entgegenhaltungen:
- US-A1- 2004 122 934
- US-A1- 2005 025 164
- "3rd Generation Partnership Project; Technical Specification Group Services and System Aspects; 3GPP system to Wireless Local Area Network (WLAN) Interworking; Functional and architectural definition (Release 6); 3GPP TR 23.934" ETSI STANDARDS, EUROPEAN TELECOMMUNICATIONS STANDARDS INSTITUTE, SOPHIA-ANTIPO, FR, Nr. V100, August 2002 (2002-08), XP014021958 ISSN: 0000-0001
- "Digital cellular telecommunications system (Phase 2+); Universal Mobile Telecommunications System (UMTS); IP Multimedia Subsystem (IMS); Stage 2 (3GPP TS 23.228 version 6.9.0 Release 6); ETSI TS 123 228" ETSI STANDARDS, EUROPEAN TELECOMMUNICATIONS STANDARDS INSTITUTE, SOPHIA-ANTIPO, FR, Bd. 3-SA2, Nr. V690, März 2005 (2005-03), XP014027532 ISSN: 0000-0001 in der Anmeldung erwähnt

## Beschreibung

Die Erfindung betrifft ein Verfahren zum Aufrechterhalten mindestens einer Daten-Verbindung mit einem Endgerät bei einem Wechsel von einem ersten Kommunikationszugangsnetz zu mindestens einem zweiten Kommunikationszugangsnetz.

Endgeräte, zum Beispiel Mobilfunkendgerät, mobile Computer, Computer, mobile Organizer, ein Festnetztelefon etc. werden zunehmend muli-modal, d. h. sie können verschiedene Radiosysteme und Zugangstechniken wie zum Beispiel ein WLAN-Netz in Ergänzung zu einem UMTS-Kommunikationsnetz und einem GSM-Kommunikationsnetz unterstützen. Damit stellt sich der Bedarf nach Aufrechterhaltung der Dienste beim Wechsel der Radiotechnologie, also einem "Handover" zwischen den,verschiedenen Radiotechnologien.

Von den Kommunikationszugangsnetzen zu unterscheiden sind die zugehörigen IP-Kommunikationsnetze, die den Zugang zu den IP basierten Diensten des Netzbetreibers herstellen und mit den Kommunikationszugangsnetzen verbunden sind. In der Regel sind diese spezifisch für das Kommunikationszugangsnetz. Für die GSM-Kommunikationsnetze und die UMTS-Kommunikationsnetze handelt es sich dabei beispielsweise um das gemeinsame GPRS-System bzw. GPRS-Kommunikationsnetz, für WLAN-Zugang wird in der Regel ein anderes eigenes Kommunikationszugangsnetz verwendet. Mit dem Wechsel der Radiotechnologie (nicht zwischen GSM und UMTS, aber zwischen WLAN und GSM/UMTS) geht damit ein Wechsel des Kommunikationszugangsnetzes einher.

Die Frage nach Aufrechterhaltung der Dienste beim Wechsel der Radiotechnologie ist also insbesondere eine Frage nach Aufrechterhaltung der Dienste beim Wechsel des Kommunikationszugangsnetzes.

Diese Fragestellung wird gegenwärtig bei 3GPP SA2 untersucht. Dabei geht es um zwei verwandte, aber unterschiedliche Probleme:
1) Wie können bei einem Wechsel der Radiotechnologie und damit des Kommunikationszugangsnetzes bestehende IP Multimedia Dienste aufrechterhalten werden?
2) Wie kann bei einem Wechsel der Radiotechnologie zwischen GSM/UMTS und WLAN eine Dienste-Kontinuität zwischen einer paketbasierten "Voice over IP" Verbindung im WLAN und einer verbindungsorientierten (leitungsvermittelten) "CS" Sprachverbindung hergestellt werden?

Bei der zweiten Fragestellung geht man davon aus, dass das GSM- und auch das UMTS- Kommunikationsnetz (noch) nicht für Sprachverbindungen über IP verwendet werden kann/soll.

Für dieses Problem gibt es bisher keine allgemein bekannten vollständigen Lösungen für öffentliche Kommunikationsnetze.

Jedoch sind folgende Ansätze allgemein bekannt:
a) Die Verwendung des Protokolls "Mobile IP" ermöglicht es prinzipiell, IP basierte Dienste bei einem Wechsel des Kommunikationszugangsnetzes (IP-Zugangsnetz) aufrechtzuerhalten. Mobile IP ist aber für den Mobilfunk nach 3GPP nicht gut geeignet, da die Kombination mit der GPRS Architektur sehr ineffizient wird (zusätzlicher mobile IP Tunnel oberhalb des GTP Tunnels).
b) Insbesondere für Unternehmen (Enterprise-Segment) gibt es die Möglichkeit mittels einer Dreierkonferenz. Hierfür wird eine Sprachverbindung zwischen dem multi-modalen Endgerät und dem Gesprächspartner kurzfristig wie zu einer Dreierkonferenz erweitert. Das Endgerät ist dabei zweimal (über beide Radiotechnologien) eingebunden. Der Nachteil ist, dass ein Konferenz-Server benötigt wird, der die Nutzdaten verdoppelt. In einer Enterprise-Umgebung kann dieser relativ einfach platziert werden, da die Fragen nach Ort und Lastverteilung relativ einfach geklärt werden können. Für öffentliche Kommunikationsnetze stellt dies eine schwierige Herausforderung dar.
c) Eine weitere Möglichkeit besteht darin, für verschiedene Radiosysteme das gleiche Kommunikationszugangsnetz zu verwenden. Beispiele hierfür sind die so genannte "tunnel extension", die in der 3GPP Spezifikation TS 23.234, Annex F standardisiert wurde, oder die UMA-Spezifikationen (http://www.umatechnology.org). Nachteile einer solchen Lösung ist die stark erhöhte Komplexität des IP Zugangs über WLAN, und dass dem auf den Mobilfunk optimierten GPRS-Zugangsnetz durch den Anschluß breitbandiger WLAN-Zugangsnetze eine nicht unerhebliche Zusatzlast aufgebürdet wird.

US 2005/025164 A1 beschreibt ein Verfahren zum Aufrechterhalten einer IP Datenverbindung mit einem Endgerät bei einem Wechsel von einem GPRS/UMTS Kommunikationszugangsnetz zu einem WLAN Kommunikationszugangsnetz und umgekehrt, wobei die Datenverbindung mittels eines GTP-Tunneling-Verfahrens aufrechterhalten wird. US 2004/122934 A1 beschreibt ein Verfahren zur Registrierung eines Endgerätes bei einem IP-Heimat-Kommunikationsnetz mit einer zugewiesenen privaten Nutzer-Identität und einer oder mehreren zugewiesenen öffentlichen Nutzer-Identitäten bei einem Wechsel des Endgerätes in ein IP-Besucher-Kommunikationsnetz.

Aufgabe der Erfindung ist es, eine einfache und effiziente Möglichkeit für die Aufrechterhaltung einer Daten-Verbindung beim Wechsel des Kommunikationszugangsnetzes vorzuschlagen.

Die Aufgabe wird erfindungsgemäß durch die Gegenstände der unabhängigen Patentansprüche gelöst. Weiterbildungen der Erfindung sind in den Unteransprüchen angegeben.

Ein Kern der Erfindung ist darin zu sehen, dass zum Aufrechterhalten mindestens einer Daten-Verbindung mit einem Endgerät bei einem Wechsel von einem ersten Kommunikationszugangsnetz zu mindestens einem zweiten Kommunikationszugangsnetz das Endgerät zu der selben "öffentlichen" Nutzer-Identität (zum Beispiel eine IMS public user identity) mindestens zwei IP-Adressen erhält und sich parallel pro Kommunikatiönszugangsnetz mit der einen gemeinsamen (die selbe öffentliche Nutzeridentität für die privaten Nutzeridentitäten) "öffentlichen" und mit jeweils einer "privaten" Nutzer-Identität (IMS private user identity) und einer IP-Adresse bei einem IP-Kommunikationsnetz für das erste und das mindestens eine zweite Kommunikationszugangsnetz registriert. Die öffentliche Nutzeridentität (IMS public user identity) und die private Nutzeridentität (IMS private user identity) sind im 3GPP-Standard TS 23.228 standardisiert. Eine private Nutzer-Identität kann zum Beispiel eine Nutzer-Kennung mit einem Passwort sein. Die Konfiguration dieser privaten Nutzer-Identität kann dabei vom Endgerät und/oder von einer Netzeinheit, zum Beispiel der HSS-Einheit (Home Subscriber Server), geschehen. Denn damit kann das Endgerät das IP-Multimedia-Subsystem nach 3GPP oder 3GPP2 nutzen. Jedoch muss das Endgerät zum einen eine IP Adresse und eine IP-Verbindung zum IP-Multimedia-Subsystem haben; diese wird zum Beispiel durch das GPRS-Netz oder durch das WLAN-Netz bereitgestellt; zum anderen sich im IMS registrieren. Dabei läuft eine Authentifizierung ab. Zur Authentifizierung wird die "private" Nutzer-Identität verwendet. Vor allem aber wird aus SIP-Sicht die im IP-Multimedia-Subsystem IMS und dem Endgerät (Terminal) dauerhaft bekannte IMS public user identity, zum Beispiel eine SIP URI, eine Tel-URI etc., an die aktuelle IP Addresse "gebunden", d.h. requests für die SIP-URI werden jetzt an diese IP-Adresse gesendet. Als Kommunikationszugangsnetz kann dabei ein paketvermittelndes Kommunikationsnetz, ein WLAN-Netz, ein GPRS-Netz (oder das Analogon für CDMA-Netze, nämlich die Multimedia-Domain (Domäne)) und/oder ein zellulares Mobilfunknetz verwendet werden. Als IP-Kommunikationsnetz kann zum Beispiel ein IP Multimedia-Subsystem oder ein ähnliches IP-Kommunikationsnetz verwendet werden. Gewöhnlich ist ein Endgerät nur über ein Kommunikationszugangsnetz registriert. Erfindungsgemäß werden einem einzigen multimodalen Endgerät mehrere Nutzer-Identitäten (IMS Private User Identities) zugewiesen, vorzugsweise jeweils eine pro Kommunikationszugangsnetz. Diese Nutzer-Identitäten werden im Endgerät und netzseitig konfiguriert. Damit kann das Endgerät sich nun parallel über verschiedene Kommunikationszugangsnetze mit der selben "öffentlichen" Nutzer-Identität im IP-Kommunikationsnetz registrieren, ohne dass eine Registrierung die andere ersetzt. Insbesondere beendet damit eine Registrierung nicht die Verbindungen (Sessions), die über ein anderes Kommunikationszugangsnetz aufgebaut wurden.

Es wird erfindungsgemäß ein (multimodales) Endgerät, zum Beispiel ein Mobilfunkendgerät, ein mobiler Computer, ein mobiler Organizer, ein Festnetztelefon, eine Set Top - Box (Gerät für die Videotelephonie und zum Empfang von (digitalen) Fernsehkanälen über ein IP-Kommunikationsnetz), ein Computer etc. betrachtet, welches durch unterschiedliche Radiotechnologien Anschluss zu unterschiedliche Kommunikationszugangsnetzen bzw. IP Zugangssystemen (IP-CANs) bekommt, welche jeweils Zugang zu den IP Diensten des Netzbetreibers, insbesondere Dienste über das IP-Multimedia-Subsystem IMS, ermöglichen.

Im IP-Multimedia-Subsystem IMS oder allgemeiner in SIP-Netzen (Kommunikationsnetze, die das SIP-Protokoll zur Signalisierung nutzen), hält das Endgerät für einen Sprach -oder Datendienst logisch gesehen einerseits eine Signalisierungsverbindung zu den SIP Servern im Kommunikationsnetz (im IMS: CSCF = Call State Control Function), andererseits eine "Verbindung" für die Nutzdaten (in der Regel Ende zu Ende). Erfindungsgemäß können für die Signalisierung und die Nutzdaten unterschiedliche Kommunikationszugangsnetze bzw. IP Zugangsnetze verwendet werden. Dies wird zum Beispiel durch das SIP/SDP-Protokoll ermöglicht. Das Endgerät kann also beispielsweise seine Nutzdaten über das breitbandige WLAN-Netz (ein erstes Kommunikationszugangsnetz) senden, aber die SIP-Signalisierung zum IP-Multimedia Subsystem über das GPRS-Netz (ein zweites Kommunikationszugangsnetz) führen. Dieser Aspekt der Erfindung ist weder auf ein Kommunikationszugangsnetz noch auf ein Signalisierungsprotokoll beschränkt. So kann beispielsweise neben dem SIP-Protokoll auch das H.323-Protokoll, ein IP-basiertes-Signalisierungsprotokoll etc. als Signalisierungsprotokoll verwendet werden.

Erfindungsgemäß wird der Wechsel des Kommunikationszugangsnetze für Nutzdaten und für die Signalisierung zumindest logisch getrennt. Bei einem Wechsel des Kommunikationszugangsnetzes für die Nutzdaten zu einem zweiten Kommunikationszugangsnetz kann eine bestehende Signalisierungsverbindung über ein erstes Kommunikationszugangsnetz beibehalten werden. Wenn also über ein Kommunikationszugangsnetz (IP-CAN) eine Signalisierungsverbindung (zum Beispiel ein SIP Dialog) besteht, die eine Nutzdaten-Verbindung (Session) über das gleiche oder ein verschiedenes Kommunikationszugangsnetz (IP-CAN) kontrolliert bzw. überwacht, so ermöglicht eine Erneuerung zum Beispiel des SIP-Dialogs mittels zum Beispiel einer Wieder-Einladungs-Nachricht (re-INVITE), die Nutzdaten-Verbindung zu wechseln. Selbstverständlich soll es möglich sein, dass sowohl die Signalisierungsverbindung als auch die Nutzdaten-Verbindung vom ersten Kommunikationszugangsnetz zum zweiten Kommunikationszugangsnetz übergeben werden. Ein weiteres Szenario könnte unter Umständen sein, dass die Nutzdaten-Verbindung beim ersten Kommunikationszugangsnetz bestehen bleibt und lediglich die Signalisierungsverbindung zum zweiten Kommunikationszugangsnetz gewechselt wird. Hierbei wird von der Möglichkeit Gebrauch gemacht, im SIP/SDP verschiedene IP Adressen bzw. Nutzer-Identität zu verwenden. Wenn also zum Beispiel zunächst Nutzdaten über ein WLAN-Netz, die Signalisierung aber über ein GPRS-Netz geführt wird, dann ist es möglich mittels der re-INVITE - Nachricht fortan auch zum Beispiel die Sprachverbindung über das GPRS-Netz zu führen, oder umgekehrt. Ebenso ist es selbstverständlich umgekehrt möglich die Signalisierung und die Nutzdaten, die zunächst über das gleiche Kommunikationszugangsnetz IP-CAN übertragen werden, mittels der re-INVITE - Nachricht zu trennen.

Falls das Endgerät über Registrierungen bei zwei verschiedenen Kommunikationszugangsnetzen und eine Nutzdatenverbindung, die über eines der Kommunikationszugangsnetze aufgebaut wurde, verfügt, dann ist es erfindungsgemäß möglich den Kontrollkanal, d. h. die Signalisierungsverbindung, von einem ersten Kommunikationszugangsnetz auf das zweite Kommunikationszugangsnetz zu übergeben: hierzu wird zum Beispiel die SIP Signalisierung verwendet, nämlich entweder mittels REFER-Prozedur, die eine Rufumleitung bewirkt, oder eine neue INVITE-Prozedur mit "Ersatz"-Kopfzeile "Replaces header".Der "Replaces header" bewirkt, dass ein SIP Dialog einen anderen ersetzt. In beiden Fällen bleibt die Nutz-Verbindung erhalten. Optional kann erfindungsgemäß zugleich das Kommunikationszugangsnetz für die Nutz-Verbindung gewechselt werden.

Es gibt Mechanismen, die es erlauben eine CS-Verbindung (leitungsvermittelnde Verbindung) als eine (möglicherweise einzige) Komponente einer IMS SIP Verbindung zu betrachten. Diese verwenden eine Variante der SIP "3rd party call control", siehe zum Beispiel Alternative A in der Spezifikation 3GPP TR 23.899, und in der Regel auch einen (logischen) Applikationsserver (genannt CBCF in der Spezifikation 3GPP TS 23.899).

Ein großer Vorteil der Erfindung besteht darin, dass es sich um eine technisch vergleichsweise einfach realisierbare Lösung eines komplexen Problems handelt, insbesondere falls eine "CS Bearer Control" schon realisiert ist.

Ein weiterer Vorteil besteht darin, dass die bereits existierenden Signalisierungs-Protokolle durch eine minimale Modifikation verwendet werden können und somit ist die Erfindung einfach zu implementieren.

Ein weiterer Vorteil der Erfindung besteht darin, dass beim Wechsel von Sprache über IP (Voice over IP) im WLAN zu Sprache in der CS-Domäne (Domain) der benötigte ApplikationsServer (z.B. CBCF), der die Überwachung (SIP 3rd party call control) ausführt, nicht von Anfang im Verbindungspfad sein muss. Vielmehr wird er erst durch eine Signalisierungsprozedur (zum Beispiel INVITE) mit zum Beispiel "Ersatz"-Kopfzeile "Replaces header" in die Verbindung aufgenommen.

Die Erfindung wird anhand eines in den Figuren dargestellten Ausführungsbeispiels näher erläutert. Im Einzelnen zeigen
- Figur 1: eine vereinfachte Systemarchitektur mit Signalisierungs- und Nutzdaten, die über unterschiedliche Kommunikationszugangsnetze übertragen werden,
- Figur 2: einen Wechsel des Kommunikationszugangsnetzes für Nutzdaten,
- Figur 3: eine Trennung von Signalisierungs- und Nutzdaten,
- Figur 4: ein Beispiel für die parallele Registrierung,
- Figur 5: den Wechsel der Signalisierungs-Verbindung bei Aufrechterhaltung der Nutzdaten-Verbindung,
- Figur 6: ein Beispiel für die getrennte Verarbeitung für verschiedene Radiotechnologien und Kommunikationszugangsnetze im IP-Multimedia-Subsystem.

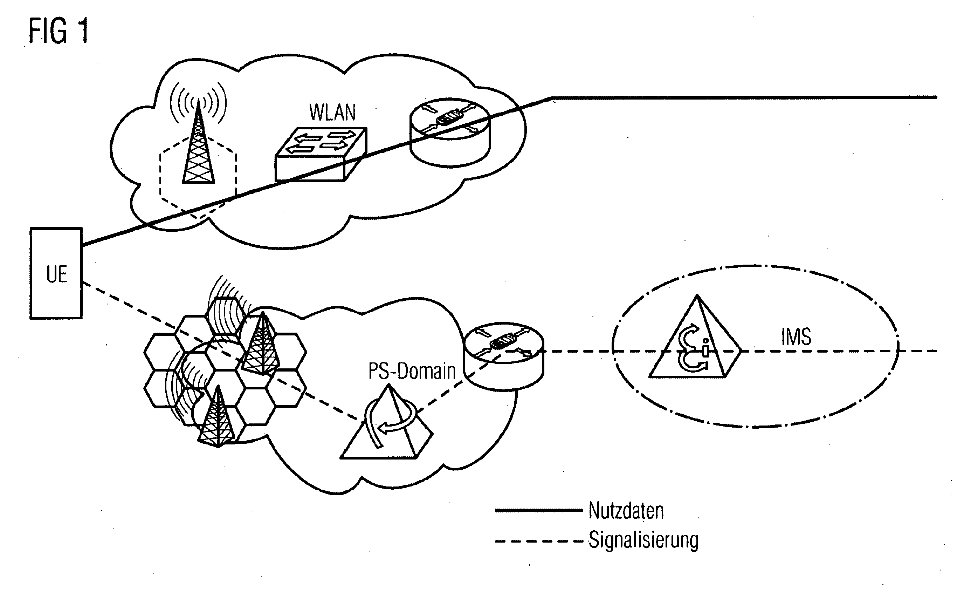

Figur 1 zeigt eine vereinfachte Systemarchitektur mit Signalisierungs- und Nutzdaten, die über unterschiedliche Kommunikationszugangsnetze übertragen werden. Im IP-Multimedia-Subsystem IMS oder allgemeiner in SIP-Netzen (Kommunikationsnetze, die das SIP-Protokoll zur Signalisierung nutzen), hält das Endgerät UE für einen Sprach- oder Datendienst logisch gesehen einerseits eine Signalisierungsverbindung zu den SIP Servern im Kommunikationsnetz (im IMS: CSCF = Call State Control Function), andererseits eine "Verbindung" für die Nutzdaten (in der Regel Ende zu Ende). Erfindungsgemäß können für die Signalisierung und die Nutzdaten unterschiedliche Kommunikationszugangsnetze bzw. IP Zugangsnetze verwendet werden. Dies wird zum Beispiel durch das SIP/SDP-Protokoll ermöglicht. Das Endgerät UE kann also beispielsweise seine Nutzdaten über das breitbandige WLAN-Netz WLAN senden, aber die SIP-Signalisierung zum IP-Multimedia Subsystem IMS über das GPRS-Netz PS (auch "PS-Domäne", kurz "PS" genannt) führen.

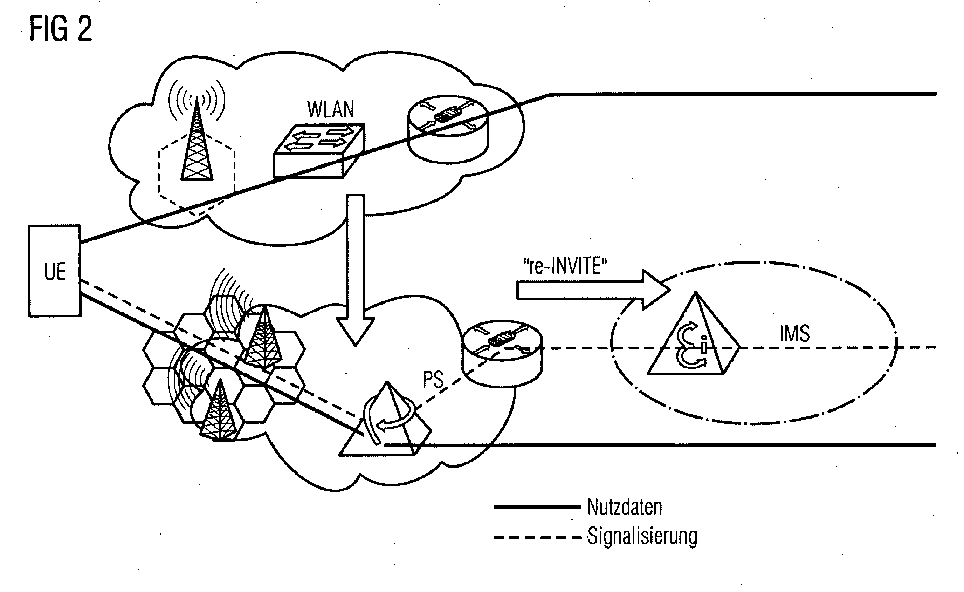

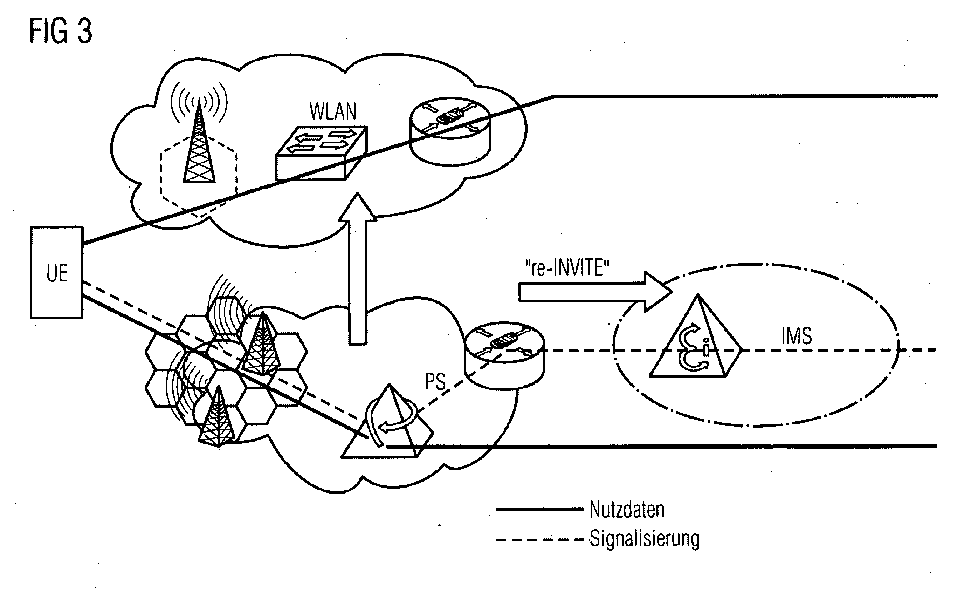

Figur 2 zeigt einen Wechsel des Kommunikätionszugangsnetzes WLAN, PS von einem WLAN-Netz zur PS-Domäne (GPRS-Netz) für die Nutzdaten bei bestehender und unter Beibehaltung der Signalisierungsverbindung über das GPRS-Netz. Erfindungsgemäß wird bei einem Wechsel der Nutzdaten-Verbindung von einem ersten Kommunikationszugangsnetz WLAN zu einem zweiten Kommunikationszugangsnetz PS eine bestehende Signalisierungsverbindung über eines der Kommunikationszugangsnetze WLAN, PS beibehalten. Wenn also über das zweite Kommunikationszugangsnetz PS eine Signalisierungsverbindung (zum Beispiel ein SIP Dialog) besteht, die Nutzdaten-Verbindung (Session) über das gleiche oder ein verschiedenes Kommunikationszugangsnetz WLAN, PS kontrolliert bzw. überwacht, so ermöglicht eine Erneuerung zum Beispiel des SIP-Dialogs mittels zum Beispiel einer Wieder-Einladungs-Nachricht (re-INVITE), die Nutzdaten-Verbindung zu wechseln. Hierbei wird von der Möglichkeit Gebrauch gemacht, im SIP/SDP verschiedene IP Adressen bzw. Nutzer-Identitäten zu verwenden. Wenn also zum Beispiel zunächst Nutzdaten über ein WLAN-Netz WLAN, die Signalisierung aber über ein GPRS-Netz PS geführt wird, dann ist es möglich mittels der re-INVITE - Nachricht fortan auch die Nutzdaten über das GPRS-Netz PS zu führen. Ebenso ist es selbstverständlich umgekehrt, wie in Figur 3 gezeigt, möglich die Signalisierung und die Nutzdaten, die zunächst über das gleiche Kommunikationszugangsnetz PS übertragen werden, mittels der re-INVITE - Nachricht zu trennen.

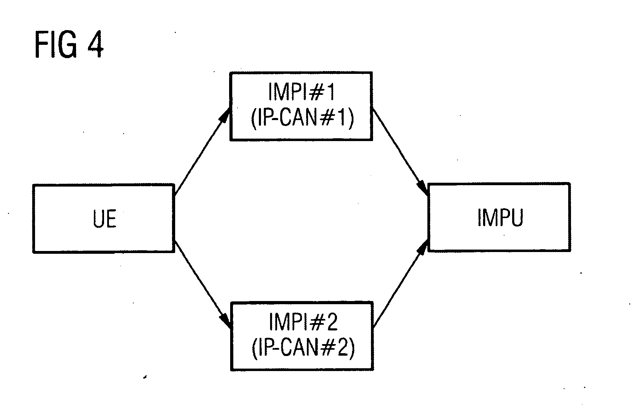

Figur 4 zeigt ein Beispiel für die parallele Registrierung und der dazugehörigen Konfiguration. Ein IP-Kommunikationsnetz IMPU weist zu einer öffentlichen Nutzeridentität des Nutzers des Endgerätes UE die beiden privaten Nutzeridentitäten IMPI#1 und IMPI#2 und zwei IP-Adressen zu. Ein Endgerät UE, das sich nun parallel beim IP-Kommunikationsnetz IMPU für die beiden Kommunikationszugangsnetze IP-CAN#1 und IP-CAN#2 registrieren möchte, registriert sich für das erste Kommunikationszugangsnetz IP-CAN#1 mit der öffentlichen Nutzeridentität, der privaten Nutzeridentität IMPI#1 und einer IP-Adresse und für das zweite Kommunikationszugangsnetz IP-CAN#2 mit der öffentlichen Nutzeridentität, der privaten Nutzeridentität IMPI#2 und einer weiteren IP-Adresse beim IP-Kommunikationsnetz IMPU. Ein Endgerät UE, das bereits beim IP-Kommunikationsnetz IMPU für das erste Kommunikationszugangsnetz IP-CAN#1 registriert ist, könnte im Rahmen eines Handovers sich parallel beim IP-Kommunikationsnetz IMPU für das zweite Kommunikationszugangsnetz registrieren und es könnte ein gleichzeitiger bzw. zeitversetzter Wechsel der Nutzdaten- und der Signalisierungs-Verbindung vom ersten IP-CAN#1 zum zweiten Kommunikationszugangsnetz IP-CAN#2 stattfinden.

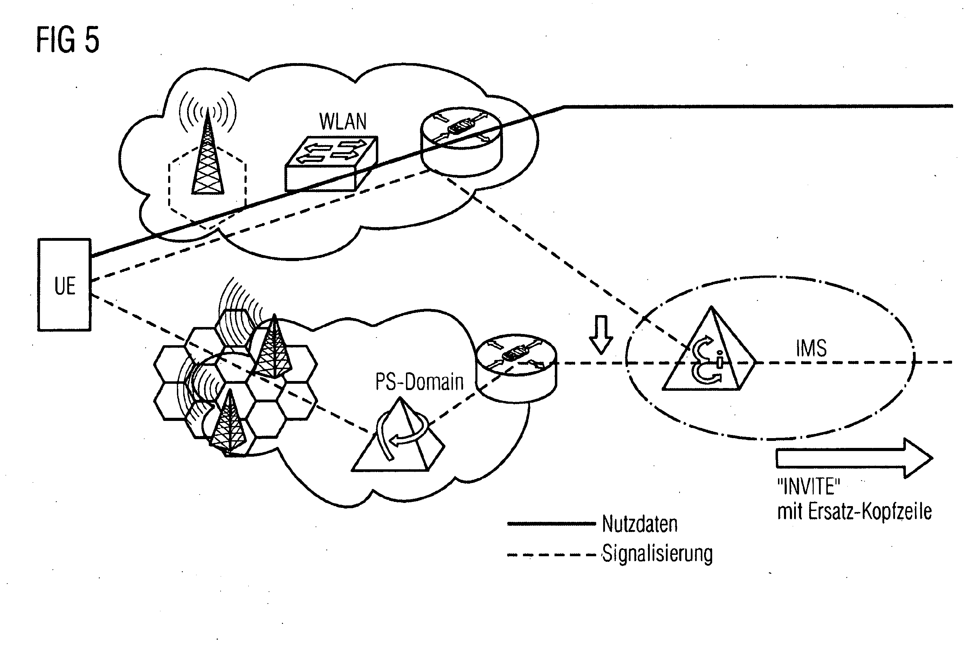

Figur 5 den Wechsel der Signalisierungs-Verbindung bei Aufrechterhaltung der Nutzdaten-Verbindung. Falls das Endgerät UE über zwei verschiedenen Kommunikationszugangsnetzen WLAN, PS im IP-Kommunikationsnetz registriert ist und über eine Nutzdaten-Verbindung, die über eines der Kommunikationszugangsnetze WLAN aufgebaut wurde, verfügt, dann ist es möglich den Kontrollkanal, d. h. die Signalisierungsverbindung, von einem ersten Kommunikationszugangsnetz WLAN auf das zweite Kommunikationszugangsnetz PS zu übergeben: hierzu wird zum Beispiel die SIP Signalisierung verwendet, nämlich entweder mittels REFER Nachricht, die eine Rufumleitung bewirkt, oder einem neuen INVITE mit "Ersatz"-Kopfzeile "Replaces header". Der "Replaces header" bewirkt, dass ein SIP Dialog einen anderen ersetzt. In beiden Fällen bleibt die Nutzdaten-Verbindung erhalten. Optional kann erfindungsgemäß zugleich das Kommunikationszugangsnetz für die Nutzdaten-Verbindung gewechselt werden.

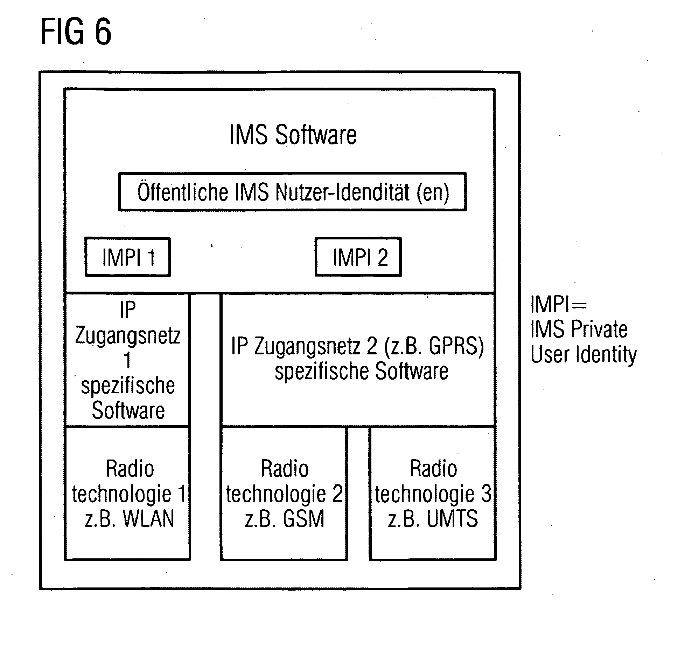

Figur 6 zeigt ein Beispiel für die getrennte Verarbeitung für verschiedene Radiotechnologien und Kommunikationszugangsnetze im IP-Multimedia-Subsystem. Dargestellt ist das erfindungsgemäße Verfahren mit der IMS Software im IP-Multimedia-Subsystem IMS.
Erfindungsgemäß sieht das Verfahren für die beispielhafte Fragestellung "Wie können bei einem Wechsel der Radiotechnologie und damit des IP Zugangsnetzes bestehende IP Multimedia Dienste aufrechterhalten werden?" wie folgt aus: Das Endgerät UE ist über ein erstes Kommunikatiönszugangsnetz 1 mit der Radiotechnologie 1, zum Beispiel WLAN, registriert und nutzt paketvermittelnde Dienste. Das Endgerät UE stellt fest, dass ein Wechsel des Kommunikationszugangsnetzes 1 mit der Radiotechnologie 1 auf Grund zum Beispiel der nachlassenden Qualität der Radioverbindung nötig wird. Das Endgerät UE registriert sich daraufhin parallel beim zweiten Kommunikationszugangsnetz 2 mit der Radiotechnologie 2, zum Beispiel ein GSM-Netz, bzw. 3, zum Beispiel ein UMTS-Netz. Damit dies möglich ist, werden dem Endgerät UE für die öffentliche Nutzeridentität es Nutzers des Endgerätes UE zwei private Nutzeridentitäten IMPI1 und IMPI2 (IMPI = IMS Private User Identity) zugewiesen. Vorzugsweise verwendet das Endgerät UE für jedes Kommunikationszugangsnetz 1, 2 jeweils eine private Nutzer-Identität, die öffentliche Nutzeridentität und jeweils eine IP-Adresse für die Registrierung beim IP-Kommunikationsnetzes. Mit Hilfe der in Figur 1 bis 4 beschriebenen Vorgehensweisen kann nun der Wechsel der Sprach- bzw. Nutzdaten-Verbindung auf das zweite Kommunikationszugangsnetz 2 realisiert werden. Anschließend kann das Endgerät UE für das erste Kommunikationszugangsnetz 1 die SIP-De-Registrierung für die Nutzdaten-Verbindung beim IP-Kommunikationsnetz, hier ein IP-Multimedia-Subsystem IMS, durchführen.

Erfindungsgemäß sieht das Verfahren für die beispielhafte Fragestellung "Wie kann bei einem Wechsel der Radiotechnologie zwischen GSM/UMTS und WLAN eine Dienste-Kontinuität zwischen einer paketbasierten 'Voice over IP' Verbindung im WLAN-Netz und einer verbindungsorientierten 'CS' Sprachverbindung hergestellt werden?" wie folgt aus: Ein Endgerät UE ist über ein Kommunikationszugangsnetz 1 mit einer Radiotechnologie, hier ein WLAN-Netz, registriert und nutzt eine Sprachverbindung über ein IP-Kommunikationsnetz, hier ein IP-Multimedia-Subsystem. Das Endgerät UE stellt fest, dass ein Wechsel des Kommunikationszugangsnetzes 1 auf Grund zum Beispiel der nachlassenden Qualität der Radioverbindung nötig wird. Das Endgerät UE registriert sich daraufhin erfindungsgemäß parallel beim zweiten Kommunikationszugangsnetz 2 mit den Radiotechnologien 2 (GSM) oder 3 (UMTS). Mit Hilfe der in Figur 1 bis 4 beschriebenen Vorgehensweise kann nun der Wechsel der Sprach- bzw. der Nutzdaten-Verbindung auf das zweite Kommunikationszugangsnetz 2 realisiert werden. Dazu wird zum Beispiel eine re-INVITE - Nachricht mit "Replaces header" mit der nötigen SIP/SDP Information gesendet um - die Signalisierung nun über das UMTS/GPRS - Kommunikationszugangsnetz 2 und die zugehörige IP Adresse zu führen; - den Aufbau einer CS-Sprachverbindung mittels "SIP 3rd Party Call Control" zu veranlassen. Es gibt Mechanismen, die es erlauben eine CS-Verbindung (leitungsvermittelnde Verbindung) als eine (möglicherweise einzige) Komponente einer IMS SIP Verbindung zu betrachten. Anschließend kann sich das Endgerät UE für das erste Kommunikationszugangsnetz 1 die SIP-De-Registrierung für die Sprach- bzw. Nutzdaten-Verbindung beim. IP-Kommunikationsnetz durchführen.

Wenn das Endgerät UE eine Multimediaverbindung, zum Beispiel einen Video-, Audio-, Sprachdienst etc. nutzt, bei der eine der Komponenten Sprache ist, kann das beschriebene Verfahren auch dazu verwendet werden, einen Handover durchzuführen, bei dem die Sprachverbindung nach dem Wechsel des Kommunikationszugangsnetzes 1 zum GSM/UMTS - Kommunikationsnetz 2 in der CS-Domäne übertragen werden, die anderen Komponenten aber in der GPRS/UMTS PS-Domäne (paketvermittelt) übertragen werden. Hier muss dann eine re-INVITE - Signalisierung mit "Replaces header" durchgeführt werden und zusätzlich muss die Vorgehensweise gemäß Figur 2 der paketvermittelten Nutzdaten-Verbindung durchgeführt werden.

In bestimmten Anwendungsfällen (zum Beispiel bei flächendeckender GSM/UMTS - Abdeckung) gibt es auch die Möglichkeit, die Übergabe des Signalisierungskanals dadurch zu vermeiden, dass die Signalisierung permanent über das GPRS/UMTS - Kommunikationszugangsnetz 2 geführt wird, auch wenn die Nutzdaten zum Beispiel das WLAN-Netz 1 nutzen. Damit ist die Aufrechterhaltung der Signalisierungs-Verbindung immer gewährleistet und beim Verlassen des WLAN-Abdeckungsbereichs müssen nur die Vorgehensweise gemäß den Figuren 2 bis 4 betrachtet werden. Unter Umständen muss zusätzlich eine CS-Verbindung (leitungsvermittelnde Verbindung) als eine (möglicherweise einzige) Komponente einer IMS SIP Verbindung zu betrachtet werden.

## Patentansprüche

1. Verfahren zum Aufrechterhalten mindestens einer Daten-Verbindung mit einem Endgerät (UE) bei einem Wechsel von einem ersten Kommunikationszugangsnetz (WLAN) zu mindestens einem zweiten Kommunikationszugangsnetz (PS),
**dadurch gekennzeichnet,**
**dass** dem Endgerät (UE) zu einer öffentlichen Nutzeridentität des Nutzers des Endgerätes (UE) mindestens zwei private Nutzer-Identitäten und mindestens zwei IP-Adressen zugewiesen werden und
**dass** das Endgerät sich bei einem IP-Kommunikationsnetz parallel pro Kommunikationszugangsnetz mit jeweils einer privaten Nutzer-Identität und mit der gemeinsamen öffentlichen Nutzeridentität und einer IP-Adresse für das erste (WLAN) und das mindestens eine zweite Kommunikationszugangsnetz (PS) registriert.

2. Verfahren nach Anspruch 1,
**dadurch gekennzeichnet,**
**dass** als IP-Kommunikationsnetz ein IP-Multimedia-Subsystem verwendet wird.

3. Verfahren nach Anspruch 1 und 2,
**dadurch gekennzeichnet,**
**dass** als private Nutzer-Identität eine private IMS-Nutzer-Identität und/oder eine Nutzer-Kennung verwendet werden.

4. Verfahren nach Anspruch 3,
**dadurch gekennzeichnet,**
**dass** die private IMS-Nutzer-Identität vom Endgerät und/oder einer Netzeinheit konfiguriert wird.

5. Verfahren nach Anspruch 1,
**dadurch gekennzeichnet,**
**dass** als öffentliche Nutzeridentität eine öffentliche IMS Nutzeridentität verwendet wird.

6. Verfahren nach Anspruch 5,
**dadurch gekennzeichnet,**
**dass** die öffentliche IMS Nutzeridentität eine SIP-URI und/oder eine Tel-URI ist.

7. Verfahren nach einem der vorhergehenden Ansprüche,
**dadurch gekennzeichnet,**
**dass** eine Daten-Verbindung eine Nutzdaten-Verbindung und/oder eine Signalisierungs-Verbindung ist.

8. Verfahren nach einem der vorhergehenden Ansprüche,
**dadurch gekennzeichnet,**
**dass** das Endgerät (UE) Signalisierungsdaten für die gleiche Daten-Verbindung über das erste Kommunikationszugangsnetz und Nutzdaten über das mindestens eine zweite Kommunikationszugangsnetz sendet und/oder empfängt.

9. Verfahren nach einem der vorhergehenden Ansprüche,
**dadurch gekennzeichnet,**
**dass** mit mindestens einer Signalisierungnachricht ein Wechsel der Nutzdaten-Verbindung vom ersten Kommunikationszugangsnetz (WLAN) zum mindestens einem zweiten Kommunikationszugangsnetz (PS) durchgeführt wird.

10. Verfahren nach einem der vorhergehenden Ansprüche;
**dadurch gekennzeichnet,**
**dass** mit mindestens einer Signalisierungsnachricht ein Wechsel der Signalisierungs-Verbindung vom ersten Kommunikationszugangsnetz (WLAN) zum mindestens einem zweiten Kommunikationszugangsnetz (PS) durchgeführt wird.

11. Verfahren nach Anspruch 8,
**dadurch gekennzeichnet,**
**dass** die Signalisierung mit mindestens einer Signalisierungsnachricht über die Signalisierungs-Verbindung mit dem ersten Kommunikationszugangsnetz (WLAN) durchgeführt wird.

12. Verfahren nach einem der vorhergehenden Ansprüche,
**dadurch gekennzeichnet,**
**dass** als Signalisierungsprotokoll das SIP-Protokoll, das H.323-Protokoll und/oder ein IP-basiertes-Signalisierungsprotokoll verwendet wird.

13. Verfahren nach Anspruch 10,
**dadurch gekennzeichnet,**
**dass** beim SIP-Protokoll die INVITE-, REFER- und/oder re-INVITE-Prozedur verwendet wird.

14. Verfahren nach Anspruch 11,
**dadurch gekennzeichnet,**
**dass** mindestens eine re-INVITE-Signalisierungsnachricht und/oder eine INVITE-Signalisierungsnachricht eine Ersatz-Kopfzeile (Replaces-Header) enthält.

15. Verfahren nach einem der vorhergehenden Ansprüche,
**dadurch gekennzeichnet,**
**dass** als Kommunikationszugangsnetz ein paketvermittelndes Kommunikationsnetz (PS), ein WLAN-Netz (WLAN), ein GPRS-Netz und/oder ein zellulares Mobilfunknetz verwendet werden.

16. Verfahren nach einem der vorhergehenden Ansprüche,
**dadurch gekennzeichnet,**
**dass** sich das Endgerät (UE) nach dem Wechsel der Nutzdaten-Verbindung vom ersten Kommunikationszugangsnetz (WLAN) zum mindestens einen zweiten Kommunikationszugangsnetz (PS) beim IP-Kommunikationsnetz für das erste Kommunikationsnetz (WLAN) de-registriert.

17. Verfahren nach einem der vorhergehenden Ansprüche,
**dadurch gekennzeichnet,**
**dass** als Endgerät (UE) ein Mobilfunkendgerät, ein mobiler Computer, ein mobiler Organizer, ein Festnetztelefon und/oder ein Computer verwendet werden.

18. IP-Kommunikationsnetz zum Aufrechterhalten mindestens einer Daten-Verbindung mit einem Endgerät (UE) bei einem Wechsel von einem ersten Kommunikationszugangsnetz (WLAN) zu mindestens einem zweiten Kommunikationszugangsnetz (PS),
**gekennzeichnet durch**
ein Mittel zur Zuweisung von mindestens zwei privaten Nutzer-Identitäten und mindestens zwei IP-Adressen zu einer öffentlichen Nutzeridentität des Nutzers des Endgerätes (UE) und
ein Mittel zur Registrierung des Endgerätes in dem IP-Kommunikationsnetz, wobei das Mittel zur Registrierung adaptiert ist, das Endgerät parallel pro Kommunikationszugangsnetz mit jeweils einer privaten Nutzer-Identität und mit der gemeinsamen öffentliche Nutzeridentität und einer IP-Adresse für das erste (WLAN) und das mindestens eine zweite Kommunikationszugangsnetz (PS) zu registrieren.

19. IP-Kommunikationsnetz nach Anspruch 18,
**dadurch gekennzeichnet, dass**
das IP Kommunikationsnetz ein IP-Multimedia-Subsystem ist.

20. IP Kommunikationsnetz nach Anspruch 18 oder 19
**dadurch gekennzeichnet, dass**
die öffentliche Nutzeridentität eine öffentliche IMS Nutzeridentität ist, vorzugsweise eine SIP-URI und/oder eine Tel-URI.

21. IP Kommunikationsnetz nach einem der Ansprüche 18 bis 2.0,
**dadurch gekennzeichnet, dass**
eine Daten-Verbindung eine Nutzdaten-Verbindung und/oder eine Signalisierungs-Verbindung ist.

22. IP Kommunikationsnetz nach einem der Ansprüche 18 bis 21,
**dadurch gekennzeichnet, dass**
mit mindestens einer Signalisierungsnachricht ein Wechsel der Nutzdaten-Verbindung vom ersten Kommunikationszugangsnetz (WLAN) zum mindestens einem zweiten Kommunikationszugangsnetz (PS) durchführbar ist.

23. IP Kommunikationsnetz nach einem der Ansprüche 18 bis 22,
**dadurch gekennzeichnet, dass**
mit mindestens einer Signalisierungsnachricht ein Wechsel der Signalisierungs-Verbindung vom ersten Kommunikationszugangsnetz (WLAN) zum mindestens einem zweiten Kommunikationszugangsnetz (PS) durchführbar ist.

24. Endgerät (UE) zum Aufrechterhalten mindestens einer Daten-Verbindung bei einem Wechsel von einem ersten Kommunikationszugangsnetz (WLAN) zu mindestens einem zweiten Kommunikationszugangsnetz (PS),
**gekennzeichnet durch**
ein Mittel zur Aufrechterhaltung von mindestens zwei privaten Nutzer-Identitäten und mindestens zwei IP-Adressen, welche zu einer öffentlichen Nutzeridentität des Nutzers des Endgerätes (UE) zugewiesen sind und
einem Mittel zur Registrierung bei einem IP-Kommunikationsnetz, wobei das Mittel zur Registrierung adaptiert ist, das Endgerät parallel pro Kommunikationszugangsnetz mit jeweils einer privaten Nutzer-Identität und mit der gemeinsamen öffentlichen Nutzeridentität und einer IP-Adresse für das erste (WLAN) und das mindestens eine zweite Kommunikationszugangsnetz (PS) zu registrieren.

25. Endgerät (UE) nach Anspruch 24,
**dadurch gekennzeichnet, dass**
die öffentliche Nutzeridentität eine öffentliche IMS Nutzeridentität, vorzugsweise eine SIP-URI und/oder eine Tel-URI ist.

26. Endgerät (UE) nach 24 oder 25,
**dadurch gekennzeichnet, dass**
eine Daten-Verbindung eine Nutzdaten-Verbindung und/oder eine Signalisierungs-Verbindung ist.

27. Endgerät (UE) nach einem der Ansprüche 24 bis 26,
**dadurch gekennzeichnet, dass**
mit mindestens einer Signalisierungsnachricht ein Wechsel der Nutzdaten-Verbindung vom ersten Kommunikationszugangsnetz (WLAN) zum mindestens einem zweiten Kommunikationszugangsnetz (PS) durchführbar ist.

28. Endgerät (UE) nach einem der Ansprüche 24 bis 27,
**dadurch gekennzeichnet, dass**
mit mindestens einer Signalisierungsnachricht ein Wechsel der Signalisierungs-Verbindung vom ersten Kommunikationszugangsnetz (WLAN) zum mindestens einem zweiten Kommunikationszugangsnetz (PS) durchführbar ist.

29. Endgerät (UE) nach einem der Ansprüche 24 bis 28,
**dadurch gekennzeichnet, dass**
das Endgerät (UE) adaptiert ist, Signalisierungsdaten für die gleiche Daten-Verbindung über das erste Kommunikationszugangsnetz und Nutzdaten über das mindestens eine zweite Kommunikationszugangsnetz zu senden und/oder empfangen.

## Claims

1. Method for maintaining at least one data link to a terminal (UE) when changing from a first communication access network (WLAN) to at least one second communication access network (PS),
**characterized**
**in that** the terminal (UE) is assigned at least two private user identities and at least two IP addresses for a public user identity of the user of the terminal (UE), and
**in that** the terminal registers with an IP communication network in parallel for each communication access network using a respective private user identity and using the common public user identity and an IP address for the first (WLAN) and the at least one second (PS) communication access network.

2. Method according to Claim 1,
**characterized**
**in that** the IP communication network used is an IP multimedia subsystem.

3. Method according to Claims 1 and 2,
**characterized**
**in that** the private user identity used is a private IMS user identity and/or a user identifier.

4. Method according to Claim 3,
**characterized**
**in that** the private IMS user identity is configured by the terminal and/or a network unit.

5. Method according to Claim 1,
**characterized**
**in that** the public user identity used is a public IMS user identity.

6. Method according to Claim 5,
**characterized**
**in that** the public IMS user identity is an SIP-URI and/or a Tel-URI.

7. Method according to one of the preceding claims,
**characterized**
**in that** a data link is a useful data link and/or a signalling link.

8. Method according to one of the preceding claims,
**characterized**
**in that** the terminal (UE) sends and/or receives signalling data for the same data link via the first communication access network and useful data via the at least one second communication access network.

9. Method according to one of the preceding claims,
**characterized**
**in that** at least one signalling message is used to change the useful data link from the first communication access network (WLAN) to the at least one second communication access network (PS).

10. Method according to one of the preceding claims,
**characterized**
**in that** at least one signalling message is used to change the signalling link from the first communication access network (WLAN) to the at least one second communication access network (PS).

11. Method according to Claim 8,
**characterized**
**in that** the signalling is performed using at least one signalling message via the signalling link to the first communication access network (WLAN).

12. Method according to one of the preceding claims,
**characterized**
**in that** the signalling protocol used is the SIP protocol, the H.323 protocol and/or an IP-based signalling protocol.

13. Method according to Claim 10,
**characterized**
**in that**, for the SIP protocol, the INVITE, REFER and/or re-INVITE procedure is used.

14. Method according to Claim 11,
**characterized**
**in that** at least one re-INVITE signalling message and/or an INVITE signalling message contains a Replaces header.

15. Method according to one of the preceding claims,
**characterized**
**in that** the communication access network used is a packet-switched communication network (PS), a WLAN network (WLAN), a GPRS network and/or a cellular mobile radio network.

16. Method according to one of the preceding claims,
**characterized**
**in that** the terminal (UE) de-registers with the IP communication network for the first communication network (WLAN) when the useful data link has changed from the first communication access network (WLAN) to the at least one second communication access network (PS).

17. Method according to one of the preceding claims,
**characterized**
**in that** the terminal (UE) used is a mobile radio terminal, a mobile computer, a mobile organizer, a landline telephone and/or a computer.

18. IP communication network for maintaining at least one data link to a terminal (UE) when changing from a first communication access network (WLAN) to at least one second communication access network (PS),
**characterized by**
a means for assigning at least two private user identities and at least two IP addresses for a public user identity of the user of the terminal (UE), and
a means for registering the terminal in the IP communication network, wherein the means for registration is designed to register the terminal in parallel for each communication access network using a respective private user identity and using the common public user identity and an IP address for the first (WLAN) and the at least one second (PS) communication access network.

19. IP communication network according to Claim 18,
**characterized in that**
the IP communication network is an IP multimedia subsystem.

20. IP communication network according to Claim 18 or 19,
**characterized in that**
the public user identity is a public IMS user identity, preferably an SIP-URI and/or a Tel-URI.

21. IP communication network according to one of Claims 18 to 20,
**characterized in that**
a data link is a useful data link and/or a signalling link.

22. IP communication network according to one of Claims 18 to 21,
**characterized in that**
at least one signalling message can be used to change the useful data link from the first communication access network (WLAN) to the at least one second communication access network (PS).

23. IP communication network according to one of Claims 18 to 22,
**characterized in that**
at least one signalling message can be used to change the signalling link from the first communication access network (WLAN) to the at least one second communication access network (PS).

24. Terminal (UE) for maintaining at least one data link when changing from a first communication access network (WLAN) to at least one second communication access network (PS),
**characterized by**
a means for maintaining at least two private user identities and at least two IP addresses which have been assigned for a public user identity of the user of the terminal (UE), and
a means for registering with an IP communication network, wherein the means for registration is designed to register the terminal in parallel for each communication access network using a respective private user identity and using the common public user identity and an IP address for the first (WLAN) and the at least one second (PS) communication access network.

25. Terminal (UE) according to Claim 24,
**characterized in that**
the public user identity is a public IMS user identity, preferably an SIP-URI and/or a Tel-URI.

26. Terminal (UE) according to Claim 24 or 25,
**characterized in that**
a data link is a useful data link and/or a signalling link.

27. Terminal (UE) according to one of Claims 24 to 26,
**characterized in that**
at least one signalling message can be used to change the useful data link from the first communication access network (WLAN) to the at least one second communication access network (PS).

28. Terminal (UE) according to one of Claims 24 to 27,
**characterized in that**
at least one signalling message can be used to change the signalling link from the first communication access network (WLAN) to the at least one second communication access network (PS).

29. Terminal (UE) according to one of Claims 24 to 28,
**characterized in that**
the terminal (UE) is designed to send and/or receive signalling data for the same data link via the first communication access network and useful data via the at least one second communication access network.

## Revendications

1. Procédé pour maintenir au moins une liaison de données avec un terminal (UE) lors d'un changement d'un premier réseau d'accès de communication (WLAN) à au moins un second réseau d'accès de communication (PS),
**caractérisé en ce que**
au moins deux identités d'utilisateur privées et au moins deux adresses IP sont attribuées au terminal (UE) pour une identité d'utilisateur publique de l'utilisateur du terminal (UE) et
**en ce que** le terminal s'enregistre auprès d'un réseau de communication IP parallèlement par réseau d'accès de communication avec respectivement une identité d'utilisateur privée et avec l'identité d'utilisateur publique commune et une adresse IP pour le premier réseau d'accès de communication (WLAN) et le au moins un second réseau d'accès de communication (PS).

2. Procédé selon la revendication 1,
**caractérisé en ce que**
un sous-système de multimédia IP est utilisé comme réseau de communication IP.

3. Procédé selon les revendications 1 et 2, **caractérisé en ce que**,
comme identité d'utilisateur privée, on utilise une identité d'utilisateur IMS privée et/ou un code d'utilisateur.

4. Procédé selon la revendication 3, **caractérisé en ce que**
l'identité d'utilisateur IMS privée est configurée par le terminal et/ou une unité de réseau.

5. Procédé selon la revendication 1,
**caractérisé en ce que**,
comme identité d'utilisateur publique, on utilise une identité d'utilisateur IMS publique.

6. Procédé selon la revendication 5,
**caractérisé en ce que**
l'identité d'utilisateur IMS publique est une SIP-URI et/ou une Tel-URI.

7. Procédé selon l'une quelconque des revendications précédentes,
**caractérisé en ce que**
une liaison de données est une liaison de données utiles et/ou une liaison de signalisation.

8. Procédé selon l'une quelconque des revendications précédentes,
**caractérisé en ce que**
le terminal (UE) émet et/ou reçoit des données de signalisation pour la même liaison de données via le premier réseau d'accès de communication et des données utiles via le au moins un second réseau d'accès de communication.

9. Procédé selon l'une quelconque des revendications précédentes,
**caractérisé en ce que**,
avec au moins un message de signalisation, un changement de la liaison de données utiles du premier réseau d'accès de communication (WLAN) pour au moins un second réseau d'accès de communication (PS) est effectué.

10. Procédé selon l'une quelconque des revendications précédentes,
**caractérisé en ce que**,
avec au moins un message de signalisation, un changement de la liaison de signalisation du premier réseau de communication (WLAN) pour le au moins un second réseau d'accès de communication (PS) est effectué.

11. Procédé selon la revendication 8,
**caractérisé en ce que**
la signalisation avec au moins un message de signalisation est effectuée par l'intermédiaire de la liaison de signalisation avec le premier réseau d'accès de communication (WLAN).

12. Procédé selon l'une quelconque des revendications précédentes
**caractérisé en ce que**,
comme protocole de signalisation, on utilise le protocole SIP, le protocole H.323 et/ou un protocole d'utilisation basé sur IP.

13. Procédé selon la revendication 10,
**caractérisé en ce que**
la procédure INVITE, REFER et/ou re-INVITE est utilisée pour le protocole SIP.

14. Procédé selon la revendication 11,
**caractérisé en ce que**
au moins un message de signalisation re-INVITE et/ou un message de signalisation INVITE contient une ligne d'en-tête de remplacement (Replaces-Header).

15. Procédé selon l'une quelconque des revendications précédentes,
**caractérisé en ce que**,
comme réseau d'accès de communication, on utilise un réseau de communication (PS) transmettant par paquet, un réseau WLAN (WLAN), un réseau GPRS et/ou un réseau de téléphonie mobile cellulaire.

16. Procédé selon l'une quelconque des revendications précédentes
**caractérisé en ce que**
le terminal (UE) se désenregistre après le changement de la liaison de données utiles du premier réseau d'accès de communication (WLAN) pour au moins un second réseau d'accès de communication (PS) auprès du réseau de communication IP pour le premier réseau de communication (WLAN).

17. Procédé selon l'une quelconque des revendications précédentes
**caractérisé en ce que**,
comme terminal (UE), on utilise un terminal de téléphonie mobile, un ordinateur mobile, un organiseur mobile, un téléphone de réseau fixe et/ou un ordinateur.

18. Réseau de communication IP pour le maintien d'au moins une liaison de données avec un terminal (UE) lors d'un changement d'un premier réseau d'accès de communication (WLAN) pour au moins un second réseau d'accès de communication (PS),
**caractérisé par** un moyen pour l'attribution d'au moins deux identités d'utilisateur privés et au moins deux adresses IP à une identité d'utilisateur publique de l'utilisateur du terminal (UE) et
un moyen pour l'enregistrement du terminal dans le réseau de communication IP, le moyen d'enregistrement étant adapté pour enregistrer le terminal parallèlement par réseau d'accès de communication avec respectivement une identité d'utilisateur privée et avec l'identité d'utilisateur publique commune et une adresse IP pour le premier réseau d'accès de communication (WLAN) et le au moins un second réseau d'accès de communication (PS).

19. Réseau de communication IP selon la revendication 18,
**caractérisé en ce que**
le réseau de communication IP est un sous-système multimédia IP.

20. Réseau de communication IP selon la revendication 18 ou 19,
**caractérisé en ce que**
l'identité d'utilisateur publique est une identité d'utilisateur IMS publique, de préférence une SIP-URI et/ou une Tel-URI.

21. Réseau de communication IP selon l'une quelconque des revendications 18 à 20,
**caractérisé en ce que**
une liaison de données est une liaison de données utiles et/ou une liaison de signalisation.

22. Réseau de communication IP selon l'une quelconque des revendications 18 à 21,
**caractérisé en ce que**
un changement de la liaison de données utiles du premier réseau d'accès de communication (WLAN) pour au moins un second réseau d'accès de communication (PS) peut être effectué avec au moins un message de signalisation.

23. Réseau de communication IP selon l'une quelconque des revendications 18 à 22,
**caractérisé en ce que**
un changement de la liaison de signalisation du premier réseau d'accès de communication (WLAN) pour au moins un second réseau d'accès de communication (PS) peut être effectué avec au moins un message de signalisation.

24. Terminal (UE) pour le maintien d'au moins une liaison de données lors d'un changement d'un premier réseau d'accès de communication (WLAN) pour au moins un second réseau d'accès de communication (PS),
**caractérisé par**
un moyen pour le maintien d'au moins deux identités d'utilisateur privées et au moins deux adresses IP, qui sont attribuées à une identité d'utilisateur publique de l'utilisateur du terminal (UE) et
un moyen pour l'enregistrement auprès d'un réseau de communication IP, le moyen pour l'enregistrement étant adapté pour enregistrer le terminal parallèlement par réseau d'accès de communication avec respectivement une identité d'utilisateur privée et avec l'identité d'utilisateur publique commune et une adresse IP pour le premier réseau d'accès de communication (WLAN) et le au moins un second réseau d'accès de communication (PS).

25. Terminal (UE) selon la revendication 24,
**caractérisé en ce que**
l'identité d'utilisateur publique est une identité d'utilisateur IMS publique, de préférence une SIP-URI et/ou une Tel-URI.

26. Terminal (UE) selon la revendication 24 ou 25,
**caractérisé en ce que**
une liaison de données est une liaison de données utiles et/ou une liaison de signalisation.

27. Terminal (UE) selon l'une quelconque des revendications 24 à 26,
**caractérisé en ce que**
un changement de la liaison de données utiles du premier réseau d'accès de communication (WLAN) pour au moins un second réseau d'accès de communication (PS) peut être effectué avec au moins un message de signalisation.

28. Terminal (UE) selon l'une quelconque des revendications 24 à 27,
**caractérisé en ce que**
un changement de la liaison de signalisation du premier réseau d'accès de communication (WLAN) pour au moins un second réseau d'accès de communication (PS) peut être effectué avec au moins un message de signalisation.

29. Terminal (UE) selon l'une quelconque des revendications 24 à 28,
**caractérisé en ce que**
le terminal (UE) est adapté pour envoyer et/ou recevoir des données de signalisation pour la même liaison de données via le premier réseau d'accès de communication et des données utiles via le au moins un second réseau d'accès de communication.
